# EUROPÄISCHE PATENTSCHRIFT

(11) **EP 0 910 199 B1**
(45) Veröffentlichungstag und Bekanntmachung des Hinweises auf die Patenterteilung: **20.07.2005**
(21) Anmeldenummer: 98250359.1
(22) Anmeldetag: 13.10.1998
(51) Int. Cl.: H04M 3/48, H04M 15/00, H04Q 11/04

(54) **Callback-Verfahren**
Call back method
Méthode de rappel

(30) Priorität: 15.10.1997 DE 19746712
(43) Veröffentlichungstag der Anmeldung: 21.04.1999
(73) Patentinhaber: Teles AG Informationstechnologien, 10587 Berlin (DE)
(72) Erfinder: Paetsch, Frank, 10961 Berlin (DE)
(74) Vertreter: Müller, Wolfram Hubertus, Dipl.-Phys.

(56) Entgegenhaltungen:
- EP-A- 0 588 571
- WO-A-97/19548
- WO-A-97/24860
- WO-A-97/28657
- DE-A- 19 619 521
- DE-A- 19 711 112
- FR-A- 2 744 312
- US-A- 5 289 536
- FLIEDNER B: "PRIVATE NETZE AUF DEM WEG IN DIE ZUKUNFT. DURCHGANGIGE SERVICELEISTUNGEN SICHERN MARKTCHANCEN FUR UNTERNEHMEN" TELCOM REPORT, Bd. 18, Nr. 2, 1. März 1995, Seiten 75-77, XP000510937

## Beschreibung

### Gegenstand der Erfindung

Die Erfindung betrifft ein Callback-Verfahren nach dem Oberbegriff des Anspruchs 1 sowie ein Einwahlsystem in ein Kommunikationsnetz und ein Least-Cost-Routing-System zur Durchführung des Verfahrens.

### Hintergrund der Erfindung

Als Callback-Verfahren werden Verfahren bezeichnet, bei denen zu einem Verbindungsaufbau zwischen einem rufenden Telekommunikationssystem und einem gerufenen Telekommunikationssystem zunächst ein Computer angewählt wird, der einem Kommunikationsnetz niedriger Preisstruktur angehört, und durch diesen Computer ein Rückruf zum rufenden Telekommunikationssystem erfolgt. Der Vorteil liegt darin, daß die Kosten der Telekommunikationsverbindung auf der Grundlage der preisgünstigen Tarife des Kommunikationsnetzes erfolgen, dem der angewählte Computer angehört. Insbesondere im transatlantischen Telefonverkehr haben Callback-Verfahren eine erhebliche wirtschaftliche Bedeutung gewonnen. Sie sind allgemein immer dann anwendbar, wenn sich die Preisstrukturen miteinander gekoppelter Telekommunikationsnetze unterscheiden.

Es sind Callback-Verfahren bekannt, bei denen vom rufenden Telekommunikationsgerät ein "Lockruf" an ein Einwahlsystem eines Telekommunikationsnetzes mit günstiger Preisstruktur, beispielsweise einen in den USA gelegenen Computer erfolgt. Nach ein- bis zweimaligem Klingeln muß der Anrufer den Hörer wieder auflegen. Auf diesen Lockruf hin erfolgt ein Rückruf vom Einwahlsystem an den rufenden Teilnehmer. Wenn dieser auf den Rückruf hin die Verbindung aufnimmt, erhält er den Wählton des Telekommunikationsnetzes, dem das Einwahlsystem angehört. Der rufende Teilnehmer kann nun die Rufnummer des gerufenen Teilnehmers in üblicher Weise eingeben, worauf eine Verbindung zum gerufenen Teilnehmer aufgebaut wird. Die Kosten der Verbindung berechnen sich auf der Grundlage der preisgünstigen Tarife des Telekommunikationsnetzes, dem das Einwahlsystem angehört.

Ein wesentlicher Nachteil dieses Callback-Verfahrens liegt darin, daß zweimal hintereinander eine Telefonverbindung aufgebaut werden muß, erst zum Einwahlsystem und nach erfolgtem Rückruf zum gerufenen Endteilnehmer. Dies ist mühsam und kostet Zeit. Ein weiterer Nachteil des bekannten Verfahrens liegt darin, daß auch im Fall, daß das gerufene Telekommunikationsendsystem keine Verbindung annehmen kann (Besetzt-Fall), für den rufenden Teilnehmer Kosten entstehen, nämlich die Kosten für den Rückruf des Einwahlsystems.

Der Nachteil, daß ein rufender Endteilnehmer zweimal eine Verbindung anwählen muß, wird durch sogenannte Least-Cost-Router vermieden, die einen intelligenten Telefonzusatz darstellen und zwischen dem Telekommunikationsendgerät und einer Netzabschlußeinheit des zugehörigen Telekommunikationsnetzes angeordnet sind. Zum einen suchen die Least-Cost-Router zwischen den Tarifen der verschiedenen Callback-Anbieter jeweils automatisch die kostengünstigste Wählverbindung heraus. Zum anderen kann der rufende Teilnehmer sogleich die Rufnummer des gerufenen Teilnehmers anwählen. Den Verbindungsaufbau zum Einwahlsystem und die Aufnahme des Rückrufs durch das Einwahlsystem führt der Least-Cost-Router dann automatisch durch.

Auch wenn sich für den Benutzer das Callback-Verfahren durch Verwendung eines Least-Cost-Routers insofern vereinfacht, als er lediglich die Rufnummer des gerufenen Teilnehmers wählen muß, und nicht auch die Rufnummer des Einwahlsystems, so ändert sich doch an dem eigentlichen Verfahren nichts. Insbesondere fallen für den Rückruf durch das Einwahlsystem auch dann Kosten an, wenn das gerufene Endsystem sich im Zustand "besetzt" befindet.

Des weiteren sind Callback-Verfahren bekannt, bei denen die Rufnummer des gerufenen Teilnehmers dem angewählten Einwahlsystem (Rückrufcomputer) bereits bei der Anzeige des Verbindungswunsches mitgeteilt wird. Die entsprechende Signalisierungsinformation wird dabei als Inband-Signal mittels DTMF (Dual Tone Multi Frequency) übertragen. Da die Information betreffend die Rufnummer des gerufenen Endsystems sogleich vorliegt, kann das Einwahlsystem bereits vor dem Rückruf eine Verbindung zum gerufenen Endsystem aufbauen. Beim Rückruf an das rufende Endsystem ist die gewünschte Verbindung dann sogleich hergestellt.

Dieses Callback-Verfahren weist den Nachteil auf, daß bereits eine kostenpflichtige Verbindung zum Einwahlsystem aufgebaut sein muß, bevor die DTMF Inband-Signale gesendet werden können. Es entstehen daher auch Kosten, wenn das gerufene Endsystem keine Verbindung annehmen kann (Besetzt-Fall). Auch ist die Wahlgeschwindigkeit relativ gering.

Aus der WO 97/19548 ist ein Callback-Verfahren bekannt, bei dem zunächst über das Internet ein Verbindungswunsch an ein zweites Kommunikationsnetz gesendet und dann aus diesem zweiten Kommunikationsnetz heraus über das Telefonnetz der eigentliche Rückruf an ein erstes Kommunikationsnetz erfolgt. Eine rufende Partei sendet dabei über einen Computer einen Verbindungswunsch über das Internet an das zweite Kommunikationsnetz. Der Verbindungswunsch wird von der rufenden Partei zusammen mit wesentlichen Informationen, beispielsweise der Rufnummer der rufenden Partei, der Rufnummer der anzurufenden Partei sowie Informationen über die Abrechnungsart oder ein Passwort über das Internet an eine Mailbox im zweiten Kommunikationssystem gesendet. Diese Mailbox wird von dem Wählsystem des zweiten Kommunikationsystems abgefragt. Mit den entsprechenden aus dem Internet empfangenen Informationen wird dann von dem zweiten Kommunikationsnetz die gerufene Partei angerufen und dann bei erfolgreichem Verbindungsaufbau die rufende Partei über ein erstes Kommunikationsnetz gerufen. Daraufhin werden beide Seiten dieses Anrufes miteinander verbunden.

Von Nachteil ist bei diesem Callback-Verfahren, dass die rufende Partei zwei Endgeräte, nämlich einen Computer und ein Telefonendgerät benötigt, und dass eine umständliche Eingabe aller Kontaktdaten, auch der eigenen Daten des rufenden Systems notwendig ist.

### Aufgabe der Erfindung

Der Erfindung liegt die Aufgabe zugrunde, ein Callback-Verfahren sowie ein Einwahlsystem und ein Least-Cost-Routing-System zur Durchführung des Callback-Verfahrens zur Verfügung zu stellen, die einen schnellen Verbindungsaufbau ermöglichen und im Besetzt-Fall keine Kosten beim rufenden Teilnehmer entstehen lassen.

### Zusammenfassung der Erfindung

Diese Aufgabe wird erfindungsgemäß durch ein Callback-Verfahren mit den Merkmalen des Anspruchs 1, ein Einwahlsystem mit den Merkmalen des Anspruchs 11 und ein Least-Cost-Routing-System mit den Merkmalen des Anspruchs 13 gelöst. Vorteilhafte und bevorzugte Ausgestaltungen der Erfindung sind in den Unteransprüchen angegeben.

Nach der erfindungsgemäßen Lösung wird dem Einwahlsystem bereits bei der Anzeige des Verbindungswunsches die Rufnummer des gerufenen Endsystems mitgeteilt. Dabei werden die entsprechenden Signalisierungsinformationen als Außenband-Signal vom rufenden Endsystem an das Einwahlsystem übertragen.

Die Verwendung einer Außenband-Signalisierung zur Übertragung der Rufnummer des Einwahlsystems sowie der Rufnummer des gerufenen Endsystems bedeutet, daß die Signalisierungsdaten auf einem eigenen Signalisierungskanal übertragen werden, der unabhängig ist von dem Kanal für die Übertragung der eigentlichen Informationsdaten. Ein Beispiel für eine Außenband-Signalisierung stellt eine ISDN-Verbindung dar, bei der die Signalisierungsdaten auf dem D-Kanal und die Informationsdaten auf einem B-Kanal übertragen werden.

Da für die Signalisierungsdaten ein eigener Kanal vorgesehen ist, sind eine wesentlich schnellere Signalisierung und ein wesentlich schnellerer Verbindungsaufbau möglich als bei einer herkömmlichen Inband-Signalisierung. Gleichzeitig ermöglicht die Verwendung einer Außenband-Signalisierung den Austausch von vermittlungstechnischen Informationen betreffend den Verbindungsaufbau und -abbau und das Erkennen des Status des gerufenen Endsystems ("besetzt" oder "frei"), ohne daß bereits eine Verbindung durchgeschaltet und damit ein kostenpflichtiger Tatbestand entstehen würde. Es ist damit möglich, den Zustand "besetzt" des gerufenen Endsystems zu erkennen, bevor ein kostenpflichtiger Rückruf des Einwahlsystems zum rufenden Teilnehmer erfolgt.

In einer bevorzugten Ausgestaltung der Erfindung werden das rufende Endsystem und das gerufene Endsystem über eine ISDN-Verbindung miteinander verbunden. Die Rufnummer des gerufenen Endsystems wird dabei zusammen mit der Rufnummer des Einwahlsystems im ISDN-D-Kanal an das Einwahlsystem übertragen.

Die Rufnummer des gerufenen Endsystems wird dabei bevorzugt wie folgt in das an das Einwahlsystem gesandte Signalisierungssignal "eingebettet": Ein vom rufenden Endsystem gesendetes D-Kanal SETUP-Protokolldatenelement wird derart konfiguriert, daß als Zieladresse die ISDN-Nummer des Einwahlsystems und als Ziel-Subadresse die ISDN-Nummer des gerufenen Endsystems gesetzt wird. Anschließend wird das SETUP-Protokolldatenelement entsprechend seiner Zieladresse durch eine oder mehrere Vermittlungsstellen des Kommunikationsnetzes, dem das rufende Endsystem angehört, an das Einwahlsystem in das zweite Kommunikationsnetz weitergeleitet. Im Einwahlsystem des zweiten Kommunikationsnetzes wird dann als neue Zieladresse die bisherige Ziel-Subadresse gesetzt, worauf eine Signalisierung vom Einwahlsystem zum gerufenen Endsystem erfolgt.

Bei Bereitschaft des gerufenen Endsystems zur Rufannahme sendet dieses ein ALERT Protokolldatenelement oder ein CALL-PROCEEDING Protokolldatenelement an das Einwahlsystem. Diese Information wird vom Einwahlsystem transparent an das rufende Endsystem durchgereicht. Dieses erkennt daher, ob das gerufene Endsystem zur Rufannahme bereit ist.

Sofern dies der Fall ist, baut das rufende Endsystem die Verbindung zum Einwahlsystem ab, das Einwahlsystem nimmt mit der Rufnummer des gerufenen Endsystems als Ursprungsadresse einen Rückruf zum rufenden Endsystem vor und das rufende Endsystem nimmt diesen Rückruf an. Die Verbindung ist dann hergestellt.

Sofern das gerufene Endsystem den Betriebszustand "besetzt" aufweist, wird die entsprechende Signalisierungsinformation ebenfalls über das Einwahlsystem an das rufende Endsystem weitergeleitet, und baut das rufende Endsystem die Verbindung zum Einwahlsystem ab. Damit wird der Besetzt-Fall erkannt, ohne daß eine Verbindung durchgeschaltet und damit ein kostenpflichtiger Tatbestand geschaffen würde.

Sofern das gerufene Endsystem zur Rufannahme bereit ist, erfolgt aufgrund der Außenband-Signalisierung ein schneller Verbindungsaufbau. Die Verbindung zum gerufenen Teilnehmer wird dabei direkt aufgebaut, das heißt es ist trotz des "Umwegs" über einen Rückruf des Einwahlsystems nur ein Wählvorgang seitens des rufenden Teilnehmers zum Aufbau der Verbindung zum gerufenen Teilnehmer erforderlich (direct line access). Dabei wird schon beim "Lockruf" die komplette Rufnummer weitergereicht.

In einem bevorzugten Ausführungsbeispiel besteht das rufende Endsystem aus einer Telekommunikationseinheit, insbesondere einer TK-Anlage, einem Telefon oder einem PC, und einem der Telekommunikationseinheit vorgeschalteten Least-Cost-Routing-System (im folgenden auch als Least-Cost-Router oder LCR-System bezeichnet), das den Verbindungsaufbau und -abbau steuert.

Das LCR-System konfiguriert das SETUP-Protokolldatenelement dabei derart, daß die Rufnummer des Einwahlsystems als Zieladresse und die Rufnummer des rufenden Endsystems als Ziel-Subadresse gesetzt wird. Ein geeignetes, das heißt für die gewählte Rufnummer kostengünstiges Einwahlsystem wird automatisch aufgrund einer internen Tabelle vom LCR-System ausgewählt. Der Endteilnehmer braucht lediglich die gewünschte Rufnummer zu wählen. Das Least-Cost-Routing-System fügt dieser Rufnummer automatisch die Rufnummer eines geeigneten Einwahlsystems hinzu, wobei beide Rufnummern als Außenband-Signal an das Einwahlsystem übertragen werden.

Für den Fall, daß das LCR-System ein ALERT-Protokolldatenelement oder ein CALL-PROCEEDING-Protokolldatenelement vom Einwahlsystem erhält und hierdurch angezeigt wird, daß das gerufene Endsystem zur Rufannahme bereit ist, baut das LCR-System die Verbindung zum Einwahlsystem ab, ohne hierüber das angeschlossene TK-Endgerät zu informieren. Die interne Verbindung zum TK-Endgerät wird dabei gehalten. Bei Annahme des Rückrufs des Einwahlsystems nimmt das LCR-System den Rückruf auf und koppelt ihn mit der intern gehaltenen Verbindung zum Telekommunikationsendgerät. Die gewünschte Verbindung ist damit hergestellt.

Eine vorteilhafte Ausgestaltung des erfindungsgemäßen Verfahrens sieht vor, daß ein SETUP-Protokolldatenelement bereits ausgesendet wird, bevor die vollständige ISDN-Nummer des gerufenen Endsystems, die in der Ziel-Subadresse enthalten ist, vorliegt. Die noch fehlenden Teile der Ziel-Subadresse werden anschließend durch ein oder mehrere INFO-Protokolldatenelemente übertragen. Bei dieser Ausgestaltung entfällt die Notwendigkeit, daß das rufende Endsystem eine Überprüfung der Vollständigkeit der ISDN-Nummer des gerufenen Endsystems durchführen muß, was mit einer nicht unerheblichen Zeitverzögerung verbunden wäre. Vielmehr erfolgt die Überprüfung der Vollständigkeit der gewählten ISDN-Nummer des gerufenen Endsystems ohne Zeitverzögerung durch eine der am Verbindungsaufbau beteiligten Vermittlungsstellen des Kommunikationsnetzes des rufenden Endsystems.

Das erfindungsgemäße Einwahlsystem in ein Kommunikationsnetz weist a) Erfassungsmittel zum Erfassen der Rufnummer eines gerufenen Endsystems in einem von einem rufenden Endsystem zum Einwahlsystem gesandten Außenband-Signal, b) Verbindungsmittel zum Verbindungsaufbau und -abbau zu dem gerufenen Endsystem auf der Grundlage der vom rufenden Endsystem als Außenband-Signal übersandten Rufnummer und c) Rückrufmittel zur Durchführung eines Rückrufes an das rufende Endsystem auf, wobei die Rufnummer des gerufenen Endsystems die Ursprungsadresse des Rückrufs darstellt.

Das erfindungsgemäße Least-Cost-Routing System weist a) Mittel zum Hinzufügen der Rufnummer eines Einwahlsystems eines Kommunikationsnetzes in ein Außenbandsignal, das die Rufnummer eines gerufenen Endsystems enthält, b) Mittel zum Aufbau einer Verbindung zum Einwahlsystem, wobei die Rufnummer des gerufenen Endsystems im Außenbandsignal zum Einwahlsystem mit übertragen wird, c) Mittel zum Abbau einer aufgebauten Verbindung zum Einwahlsystem unter Halten der entsprechende internen Verbindung zum angeschlossenen TK-Endgerät und d) Mittel zur Annahme eines Rückrufs seitens des Einwahlsystems und zur Kopplung des Rückrufs mit der intern gehaltenen Verbindung zum TK-Endgerät auf.

Bevorzugt sind die Erfassungsmittel, die Verbindungsmittel und die Rückrufmittel des Einwahlsystems sowie die Mittel zum Hinzufügen der Rufnummer, die Mittel zum Aufbau einer Verbindung, die Mittel zum Abbau einer aufgebauten Verbindung und die Mittel zur Annahme eines Rückrufs des Least-Cost-Routing System als Software ausgebildet, die zu den jeweiligen Funktionen Protokolldatenelemente wie die ISDN Protokolldatenelemente SETUP, ALERT, CALL PROCEEDING, CONNECT, RELEASE und DISCONNECT einsetzt.

Das erfindungsgemäße Einwahlsystem und das erfindungsgemäße Least-Cost-Routing System sind etwa als Personal Computer mit einer PBX-Karte und geeigneter Software ausgeführt.

### Beschreibung eines Ausführungsbeispiels

Die Erfindung wird nachfolgend unter Bezugnahme auf die Figuren der Zeichnung an einem Ausführungsbeispiel näher erläutert. Es zeigen:
- Figur 1 -: ein ISDN-Telekommunikationsnetz, über das ein erfindungsgemäßes Callback-Verfahren erfolgt;
- Figur 2 -: ein Ablaufdiagramm eines erfindungsgemäßen Callback-Verfahrens und
- Figur 3 -: schematisch ein erfindungsgemäßes Least-Cost-Routing-System zur Durchführung des erfindungsgemäßen Callback-Verfahrens.

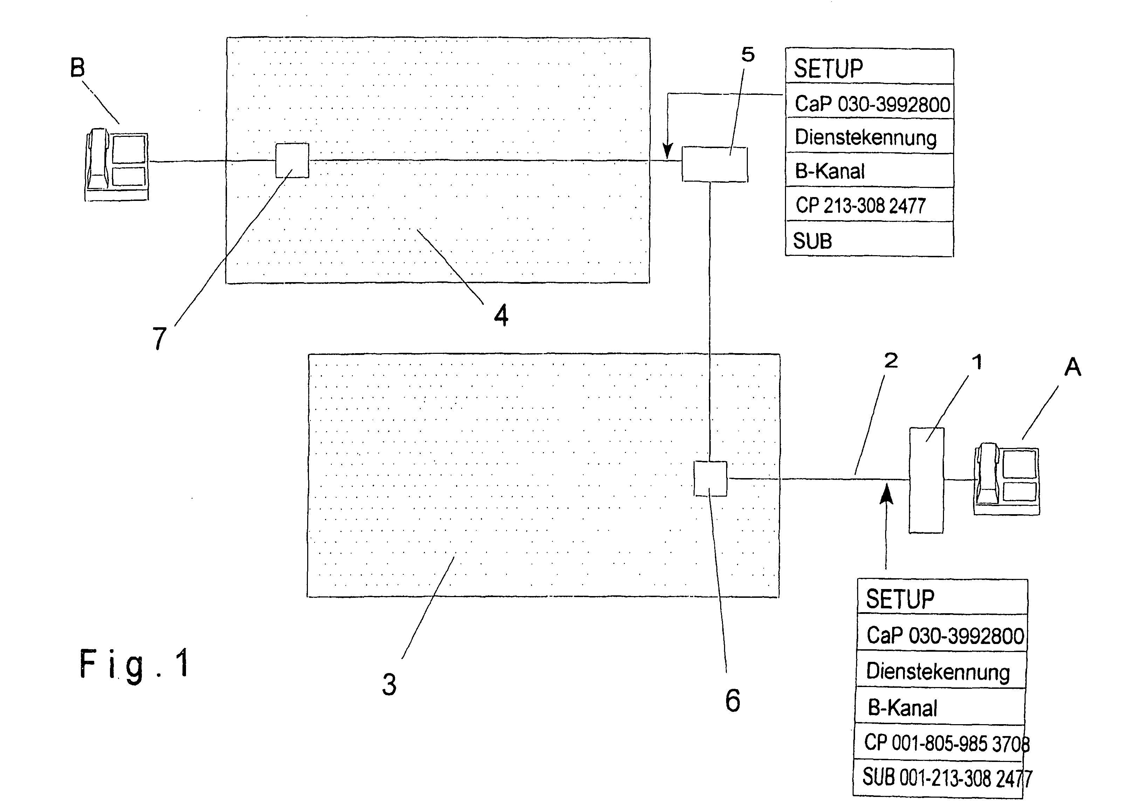

Figur 1 zeigt ein ISDN-Endsystem A, etwa ein ISDN-Telefon oder einen PC mit ISDN-Karte, von dem über ein erstes Telekommunikationsnetz 3 und ein zweites Telekommunikationsnetz 4 eine Verbindung zu einem ISDN-Endsystem B aufgebaut werden soll.

Ein Einwählsystem 5 (im folgenden auch als Dial-In bezeichnet) stellt ein Netzübergangssystem zwischen dem ersten Netz 3 und dem zweiten Netz 4 dar. Darüberhinaus dient das Einwählsystem 5 als Rückruf-Computer, wie noch erläutert werden wird. Beide Netze 3, 4 weisen eine Mehrzahl von ISDN-Vermittlungsstellen oder Netzknoten auf, von denen jeweils eine Vermittlungsstelle 6, 7 exemplarisch dargestellt ist. Es wird darauf hingewiesen, daß zwischen dem Netz 4 und dem B-Teilnehmer auch noch weitere Kommunikationsnetze zwischengeschaltet sein können oder ein Übergang zurück zum Netz 3 erfolgen kann.

Dem Endsystem A ist ein Least-Cost-Router 1 (LCR-System) zugeordnet, der einen Verbindungsaufbau und -abbau des Endsystems A steuert. Gegebenenfalls ist zusätzlich eine Telekommunikationsanlage (nicht dargestellt) vorgesehen, an die das Endsystem A zunächst angeschlossen ist. Der Least-Cost-Router 1 ist dann zwischen der Telekommunikationsanlage und der zugehörigen Vermittlungsstelle angeordnet. Derartige Anordnungen sind dem Fachmann an sich bekannt.

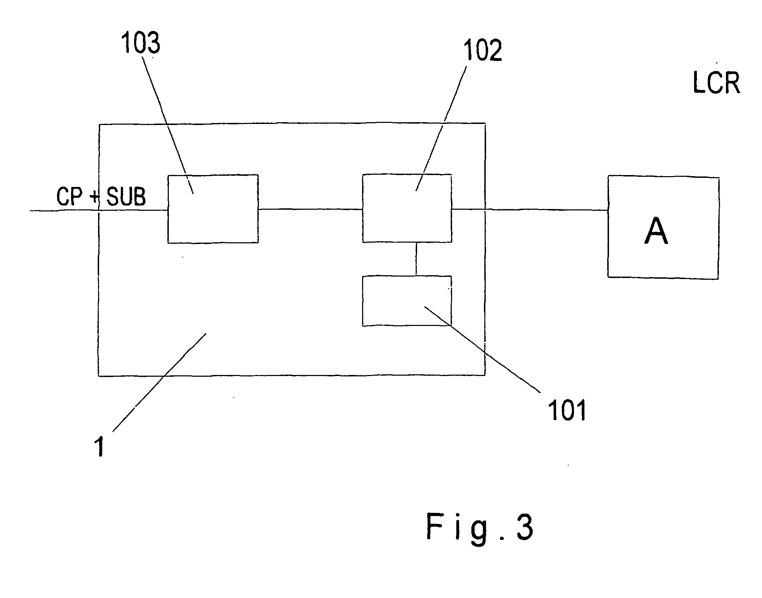

Gemäß Fig. 3 weist der Least-Cost-Router einen internen Speicher 101, eine Zuordnungseinheit 102 und eine Konfigurationseinheit 103 auf. Diese Einheiten sind funktionell zu verstehen und können als Hardware oder Software ausgebildet sein. In dem Speicher 101 sind die Einwahlnummern in verschiedene Kommunikationsnetze (insbesondere proprietäre Netze oder öffentliche Netze eines anderen Staates) sowie Informationen über die jeweilige Preisstruktur der einzelnen Netze enthalten.

In Abhängigkeit von der vom Endsyscem A angewählten Rufnummer wählt der Least-Cost-Router 1 in der Zuordnungseinheit 102 automatisch ein Einwahlsystem 5 in ein Kommunikationsnetz 4 aus, das die preisgünstigste Verbindung zum Endsystem B ermöglicht. In der Konfigurationseinheit 103 wird ein standardgemäßes ISDN SETUP-Protokolldatenelement derart konfiguriert, daß in dem SETUP-Protokolldatenelement als Zieladresse nicht, wie in der ISDN-Norm vorgesehen, die ISDN-Nummer des gerufenen Endsystems B angeben ist, sondern stattdessen die Rufnummer des Einwählsystems 5 in das Kommunikationsnetz 4. Die ISDN-Nummer des gerufenen Endsystems B wird dagegen in einer standardgemäß vorgesehenen Ziel-Subadresse des SETUP-Datenelements angegeben.

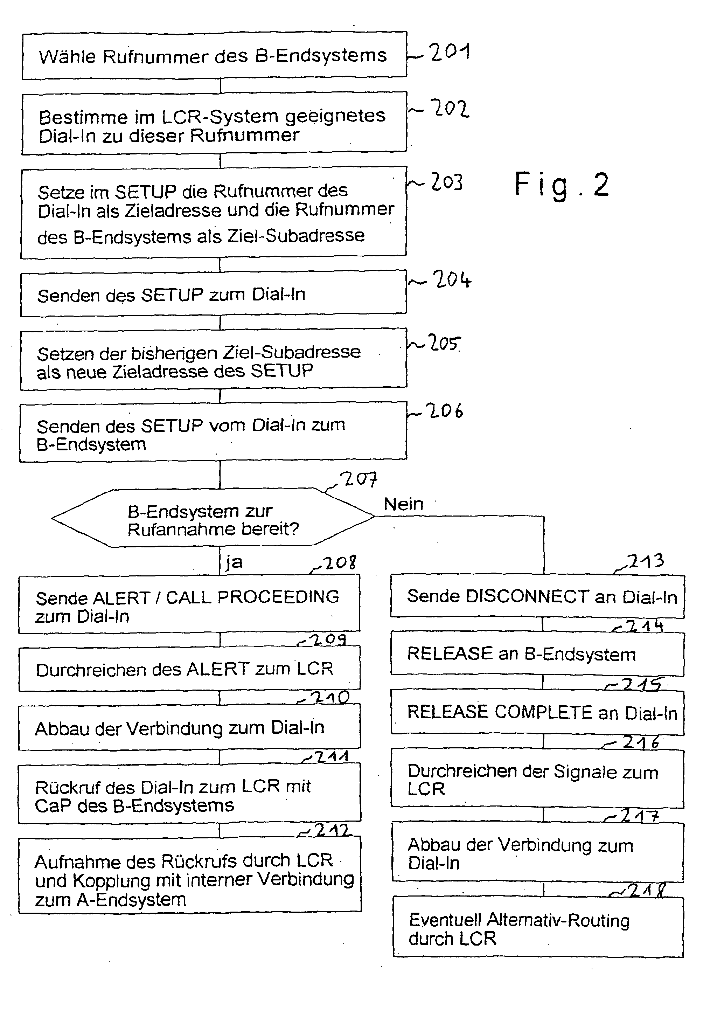

Der Verlauf des erfindungsgemäßen Callback-Verfahrens wird nachfolgend anhand der Figuren 1 und 2 näher erläutert.

Der B-Endteilnehmer wählt in üblicher Weise die Rufnummer des zu rufenden Endsystems B (Schritt 201). Zu dieser Rufnummer bestimmt das LCR-System mittels des Speichers 101 und der Zuordnungseinheit 102 ein preislich günstiges Kommunikationsnetz und zugehöriges Einwahlsystem (Dial-In) (Schritt 202). In der Konfigurationseinheit 103 des LCR-Systems 1 wird das SETUP-Protokolldatenelement dann derart konfiguriert, daß die Rufnummer des Dial-In als Zieladresse und die Rufnummer des gerufenen B-Teilnehmers als Ziel-Subadresse gesetzt wird (Schritt 203).

Aufgrund dieser Konfigurierung des SETUP-Protokolldatenelementes weist das in die zugehörige Vermittlungsstelle 6 des Kommunikationsnetzes 3 gesandte SETUP-Dacenelement folgende Parameter auf (vgl. Fig. 1):
1. die Ursprungsadresse CAP, das heißt die eigene Rufnummer (Calling Party Number),
2. eine Dienstekennung (Bearer Capability),
3. Informationen betreffend den gewählten oder zu wählenden B-Kanal,
4. eine Zieladresse CP (Called Party Number) und
5. eine Ziel-Subadresse SUB.

In einer Variante der Erfindung ist vorgesehen, daß ein SETUP-Protokolldatenelement bereits an die Vermittlungsstelle 6 ausgesendet wird, bevor die vollständige ISDN-Nummer des gerufenen Endsystems B vorliegt. So wird ein SETUP-Protokolldatenelement übermittelt, sobald die Orts- oder Landesvorwahl des zu rufenden Endsystems vorliegt. Die noch fehlenden Teile der ISDN-Nummer des gerufenen B-Teilnehmers, die in der Ziel-Subadresse SUB noch zu ergänzen sind, werden durch ein oder mehrere INFO-Protokolldatenelemente nach Aussenden des SETUP-Protokolldatenelementes nachgesendet.

Die zugehörige Vermittlungsstelle 6 des Netzes 3 leitet den Verbindungswunsch entsprechend der in der Zieladresse kodierten Einwahlnummer des Kommunikationsnetzes 4 an das Einwahlsystem 5 des Kommunikationsnetzes 4 weiter (Schritt 204). Das Einwahlsystem 5 stellt einen Callback-Computer dar, der eine Signalisierung zum gerufenen Endsystem B vornimmt und bei Bereitschaft des gerufenen Endsystems zur Rufannahme einen Rückruf an das rufende Endsystem A bzw. den diesem vorgeordneten Least-Cost-Router 1 vornimmt.

Eine Signalisierung zum gerufenen Endsystem B erfolgt dabei dadurch, daß in dem eingehenden SETUP-Protokolldatenelement die Zieladresse CP entfernt und als neue Zieladresse CP die bisherige Sub-Zieladresse SUB gesetzt wird, die die ISDN-Nummer des gerufenen Endsystems B enthält (Schritt 205). Das entsprechend veränderte SETUP-Protokolldatenelement wird vom Einwählsystem 5 über das Netz 4 zum Endsystem B gesandt (Schritt 206). Das Einwahlsystems 5 weist hierzu entsprechende Mittel auf, die als Hard- oder Software ausgebildet sein können.

In dem Beispiel der Figur 1 ist die Ursprungsadresse CaP die Telefonnummer 030-399 28 00. Als Zieladresse CP ist im SETUP-Protokolldatenelement die Rufnummer 001-805-985-3708 eines Einwahlsystems in den USA angegeben. Die zu rufende ISDN-Nummer 001-213-308-2477 eines in den USA sitzenden B-Teilnehmers ist in der Ziel-Subadresse SUB angegeben. Die Vermittlungsstelle 3 leitet den eingehenden Ruf an das Einwahlsystem 5 mit der Nummer 001-805-985-3708 weiter. Im Einwählsystem 5 wird dann als Zieladresse CP die Adresse des Endteilnehmers B, also die Nummer 001-213-308-2477 gesetzt, wobei der Ländercode 011 weggelassen wird. Die Ziel-Subadresse SUB enthält keine Informationen mehr.

Sofern das gerufene Endsystem B zur Rufannahme bereits ist (Schritt 207), sendet es ein ALERT-Protokolldatenelement an das Einwahlsystem 5 (Schritt 208). Alternativ kann auch vorgesehen sein, daß ein CALL PROCEEDING Protokolldatenelement an das Dial-In 5 gesendet wird. Diese ALERT Nachricht wird vom Dial-In transparent zum LCR-System 1 durchgereicht (Schritt 209). Das LCR-System 1 baut daraufhin die Verbindung zum Dial-In 5 ab (Schritt 210), ohne hiervon das angeschlossene Endgerät A zu informieren. Die interne Verbindung zum Endgerät A wird also gehalten.

Das Einwahlsystem (Dial-In) 5 nimmt nun einen Rückruf zum LCR-System 1 vor (Schritt 211). Der Rückruf weist als Calling Party Number CaP nicht mehr die Ursprungsadresse des A-Teilnehmers, sondern nun die Ursprungsadresse des B-Teilnehmers auf. Die Ursprungsadresse des B-Teilnehmers (die gleich Rufnummer des gerufenen B-Teilnehmers ist) ist dem Einwahlsystem 5 dabei aus dem vorherigen SETUP-Datenelement bekannt. Um diese Adresse jetzt als CaP verwenden zu können, ist es erforderlich, daß das Einwahlsystem ein geeignetes Leistungsmerkmal aufweist, etwa das Leistungmerkmal des Euro-ISDN "CLIP" (CLIP = Calling Party Identification Presentation). Dabei wird bei einer Anwendung in Deutschland insbesondere auf das Leistungsmerkmal "CLIP, no screening" der Deutsche Telekom AG zurückgegriffen.

Der Rückruf des Einwahlsystems 5 wird vom LCR-System angenommen und mit der entsprechenden intern gehaltenen Verbindung zum Endsystem A gekoppelt (Schritt 212). Dies ist möglich, da die Calling Party Number des Rückrufs gleich der vom Endgerät A gerufenen Rufnummer ist.

Zur Kopplung des Rückrufs mit der intern gehaltenen Verbindung zum Endsystem A wird zunächst bei Eingang des Rückrufs überprüft, ob eine gehaltene Verbindung vorliegt und eine Übereinstimmung der Calling Party Number des Rückrufs mit der vom Endgerät A gerufenen Rufnummer gegeben ist. Sofern dies der Fall ist, nimmt das LCR-System die Verbindung durch ein CONNECT-Protokolldatenelement auf. Dann werden die beiden Verbindungen miteinander verbunden. Die Leitung ist nun durchgeschaltet und es kann die Übertragung von Nutzdaten auf einem B-Kanal erfolgen.

Sofern das gerufene Endgerät B zur Rufannahme nicht bereit ist (Schritt 207), erfolt zwischen Endgerät B und Einwahlsystem 5 ein Verbindungsabbau durch Senden der Datenelemente DISCONNECT, RELEASE und RELEASE COMPLETE (Schritte 213, 214, 215). Diese Signale werden zum LCR-Sytem transparent durchgereicht (Schritt 216), so daß dieses erkennt, daß der gerufene Teilnehmer die Verbindung nicht aufnehmen kann. Es wird daraufhin die Verbindung zum Einwahlsystem (Dial-In) abgebaut (Schritt 217). Ggf. wird durch das LCR-System eine Alternativ-Routing vorgenommen (Schritt 218). Ein Rückruf durch das Einwahlsystem erfolgt nicht, so daß kein gebührenpflichtiger Tatbestand entsteht.

Die Erfindung beschränkt sich in ihrer Anwendung nicht auf die vorstehend genannten Ausführungsbeispiele. Wesentlich für die Erfindung ist lediglich, daß dem Einwahlsystem bereits bei der Anzeige des Verbindungswunsches die Rufnummer des gerufenen Endsystems im Rahmen einer Außenband-Signalisierung mitgeteilt wird.

## Patentansprüche

1. Callback-Verfahren, bei dem ein Verbindungswunsch eines rufenden Endsystems eines ersten Kommunikationsnetzes einem Einwahlsystem in ein zweites Kommunikationsnetz angezeigt wird, das Einwahlsystem über das zweite Kommunikationsnetz eine Signalisierung hin zum gerufenen Endsystem vornimmt und bei Bereitschaft des gerufenen Endsystems zur Rufannahme ein Rückruf des Einwahlsystems an das rufende Endsystem erfolgt,
**dadurch gekennzeichnet, daß**
dem Einwahlsystem (5) bereits bei der Anzeige des Verbindungswunsches die Rufnummer des gerufenen Endsystems (B) mitgeteilt wird, wobei die Rufnummer des gerufenen Endsystems (B) zusammen mit der Rufnummer des Einwahlsystems (5) als Außenband-Signal vom rufenden Endsystem (A) an das Einwahlsystem (5) übertragen wird.

2. Verfahren nach Anspruch 1, **dadurch gekennzeichnet, daß** bei Bereitschaft des gerufenen Endsystems (B) zur Gesprächsannahme das rufende Endsystem (A) die Verbindung zum Einwahlsystem (5) abbaut und anschließend ein Rückruf von Einwahlsystem (5) zum rufenden Endsystem (A) erfolgt.

3. Verfahren nach mindestens einem der Ansprüche 1 bis 2, **dadurch gekennzeichnet, daß** das rufende Endsystem (A) und das gerufene Endsystem (B) über eine ISDN-Verbindung miteinander verbunden werden, wobei eine Übertragung der Rufnummer des gerufenen Endsystems an das Einwahlsystem im D-Kanal erfolgt.

4. Verfahren nach Anspruch 3, **dadurch gekennzeichnet, daß**
a) ein vom rufenden Endsystem (A) gesendetes D-Kanal SETUP-Protokolldatenelement als Zieladresse die ISDN-Nummer des Einwahlsystems (5) für das zweite Kommunikationsnetz (4) und als Ziel-Subadresse die ISDN-Nummer des gerufenen Endsystems (B) enthält,
b) das SETUP-Protokolldatenelement entsprechend seiner Zieladresse durch eine oder mehrere zugehörige Vermittlungsstellen (6) des ersten Kommunikationsnetzes (3) an das Einwahlsystem (5) des zweiten Kommunikationsnetzes (4) weitergeleitet,
c) im Einwahlsystem (5) des zweiten Kommunikationsnetzes (4) als neue Zieladresse die bisherige Ziel-Subadresse gesetzt wird und
d) nach Setzen der bisherigen Ziel-Subadresse als neue Zieladresse eine Signalisierung vom Einwahlsystem (5) zum gerufenen Endsystem (B) erfolgt.

5. Verfahren nach Anspruch 4, **dadurch gekennzeichnet, daß** das gerufene Endsystem (B) bei Bereitschaft zur Rufannahme ein ALERT-Protokolldatenelement und/oder ein CALL PROCEEDING Protokolldatenelement an das Einwahlsystem (5) sendet und das entsprechende Protokolldatenelement vom Einwahlsystem transparent an das rufende Endsystem (A, 1) durchgereicht wird, worauf
e) das rufende Endsystem (A, 1) die Verbindung zum Einwahlsystem (5) abbaut,
f) das Einwahlsystem (5) mit der Rufnummer des gerufenen Endsystems (B) als Ursprungsadresse einen Rückruf zum rufenden Endsystem (A, 1) vornimmt und
g) der Rückruf vom rufenden Endsystem (A, 1) angenommen wird.

6. Verfahren nach Anspruch 4, **dadurch gekennzeichnet, daß** im Fall, daß das gerufene Endsystem (B) den Betriebszustand "Besetzt" aufweist, das Einwahlsystem (5) die Verbindung zum gerufenen Endsystem (B) abbaut, die entsprechenden Signalisierungsbefehle an das rufende Endsystem (A) durchgereicht werden und die Verbindung zwischen rufendem Endsystem und Einwahlsystem ebenfalls abgebaut wird.

7. Verfahren nach mindestens einem der vorangegangenen Ansprüche, **dadurch gekennzeichnet, daß** das rufende Endsystem eine Telekommunikationseinheit (A), insbesondere eine TK-Anlage, ein Telefon oder einen PC, und ein der Telekommunikationseinheit (A) vorgeschaltetes Least-Cost-Routing System (1) aufweist, das den Verbindungsaufbau und -abbau steuert.

8. Verfahren nach Anspruch 5 und 7, **dadurch gekennzeichnet, daß** bei Empfang eines ALERT-Protokolldatenelements und/oder ein CALL PROCEEDING Protokolldatenelements das Least Cost-Routing System (1) die Verbindung zum Einwahlsystem (5) abbaut, ohne hierüber das angeschlossene TK-Endgerät (1) zu informieren, und bei Annahme des Rückrufs des Einwahlsystems (5) den Rückruf mit der intern gehaltenen Verbindung zum TK-Endgerät (A) koppelt.

9. Verfahren nach Anspruch 5 und 7, **dadurch gekennzeichnet, daß** nach Abbau der Verbindung zum Einwahlsystem (5) für eine definierte Zeit auf einen Rückruf des Einwahlsystems gewartet wird und bei Ausbleiben des Rückrufs innerhalb der vorgegebenen Zeit ein alternatives Routing vorgenommen wird.

10. Verfahren nach mindestens einem der Ansprüche 5 bis 9, **dadurch gekennzeichnet, daß** ein SETUP-Protokolldatenelement vom rufenden Endsystem (A) bereits ausgesendet wird, bevor die vollständige ISDN-Nummer des gerufenen Endsystems (B), die in der Ziel-Subadresse enthalten ist, vorliegt, und daß die noch fehlenden Teile der Ziel-Subadresse durch ein oder mehrere INFO-Protokolldatenelemente übertragen werden, wobei von einer der am Verbindungsaufbau beteiligten Vermittlungsstellen (6) des ersten Kommunikationsnetzes (3) die Vollständigkeit der Zieladresse überprüft wird.

11. Einwahlsystem in ein Kommunikationsnetz zur Durchführung des Callback-Verfahrens nach Anspruch 1,
**gekennzeichnet durch**
a) Erfassungsmittel zum Erfassen der Rufnummer eines gerufenen Endsystems (B) in einem von einem rufenden Endsystem (A) zum Einwahlsystem (5) gesandten Außenband-Signal,
b) Verbindungsmittel zum Verbindungsaufbau und -abbau zu dem gerufenen Endsystem (B) auf der Grundlage der vom rufenden Endsystem (A) als Außenband-Signal übersandten Rufnummer und
c) Rückrufmittel zur Durchführung eines Rückrufes an das rufende Endsystem (A), wobei die Rufnummer des gerufenen Endsystems (B) die Ursprungsadresse des Rückrufs darstellt.

12. Einwahlsystem nach Anspruch 11, **dadurch gekennzeichnet, daß** die Erfassungsmittel Mittel zum Entfernen der Zieladresse in einem ISDN SETUP-Protokolldatenelement und zum Setzen der bisherigen Ziel-Subadresse als neue Zieladresse aufweisen.

13. Least-Cost-Routing System zur Durchführung des Callback-Verfahrens nach Anspruch 1, das einer Telekommunikationseinheit, insbesondere einer TK-Anlage, einem Telefon oder einem PC, vorgeschaltet ist und einen Verbindungsaufbau und -abbau steuert,
**gekennzeichnet durch**
a) Mittel (103) zum Hinzufügen der Rufnummer eines Einwahlsvstems eines Kommunikationsnetzes in ein Außenbandsignal, das die Rufnummer eines gerufenen Endsystems (B) enthält,
b) Mittel zum Aufbau einer Verbindung zum Einwahlsystem (5), wobei die Rufnummer des gerufenen Endsystems (B) im Außenbandsignal zum Einwahlsystem (5) mit übertragen wird,
c) Mittel zum Abbau einer aufgebauten Verbindung zum Einwahlsystem (5) unter Halten der entsprechenden internen Verbindung zum angeschlossenen TK-Endgerät und
d) Mittel zur Annahme eines Rückrufs seitens des Einwahlsystems (5) und zur Kopplung des Rückrufs mit der intern gehaltenen Verbindung zum TK-Endgerät.

14. Least-Cost-Routing System nach Anspruch 13, **dadurch gekennzeichnet, daß** die Mittel zum Hinzufügen Mittel (103) aufweisen, die in einem ISDN SETUP-Protokolldatenelement die Rufnummer des Einwahlsystems als Zieladresse und die Rufnummer des gerufenen Endsystems als Ziel-Subadresse setzen.

## Claims

1. Callback method, in which a connection request of a calling end system of a first communication network is indicated to a dial-in system into a second communication network, the dial-in system performs a signalling towards the called end system via the second communication network and, when the called end system is ready to accept the call, the dial-in system effects a callback to the calling end system,
**characterized**
**in that** the call number of the called end system (B) is communicated to the dial-in system (5) as early as when the connection request is indicated, the call number of the called end system (B) being transmitted together with the call number of the dial-in system (5) as an out-of-band signal from the calling end system (A) to the dial-in system (5).

2. Method according to Claim 1, **characterized in that**, when the called end system (B) is ready to accept the call, the calling end system (A) clears down the connection to the dial-in system (5) and a callback is subsequently effected from the dial-in system (5) to the calling end system (A).

3. Method according to at least one of Claims 1 to 2, **characterized in that** the calling end system (A) and the called end system (B) are connected to one another via an ISDN connection, the call number of the called end system being transmitted to the dial-in system in the D channel.

4. Method according to Claim 3, **characterized in that**
a) a D channel SETUP protocol data element sent by the calling end system (A) contains the ISDN number of the dial-in system (5) for the second communication network (4) as destination address and the ISDN number of the called end system (B) as destination subaddress,
b) the SETUP protocol data element is forwarded, in accordance with its destination address, by one or more associated switching centres of the first communication network (3) to the dial-in system (5) of the second communication network (4),
c) in the dial-in system (5) of the second communication network (4), the previous destination subaddress is set as new destination address, and
d) a signalling from the dial-in system (5) to the called end system (B) is effected after the previous destination subaddress has been set as new destination address.

5. Method according to Claim 4, **characterized in that**, when it is ready for accepting the call, the called end system (B) sends an ALERT protocol data element and/or a CALL PROCEEDING protocol data element to the dial-in system (5) and the corresponding protocol data element is passed through to the calling end system (A, 1) in transparent fashion by the dial-in system, whereupon
e) the calling end system (A, 1) clears down the connection to the dial-in system (5),
f) the dial-in system (5) performs a callback to the calling end system (A, 1) with the call number of the called end system (B) as source address, and
g) the callback is accepted by the calling end system (A, 1).

6. Method according to Claim 4, **characterized in that**, in the case where the called end system (B) has the operating state "busy", the dial-in system (5) clears down the connection to the called end system (B), the corresponding signalling commands are passed through to the calling end system (A) and the connection between calling end system and dial-in system is likewise cleared down.

7. Method according to at least one of the preceding claims, **characterized in that** the calling end system has a telecommunication unit (A), in particular a telecommunication installation, a telephone or a PC, and a least cost routing system (1) that is connected upstream of the telecommunication unit (A) and controls the connection set up and cleardown.

8. Method according to Claims 5 and 7, **characterized in that**, upon reception of an ALERT protocol data element and/or a CALL PROCEEDING protocol data element, the least cost routing system (1) clears down the connection to the dial-in system (5) without informing the connected telecommunication terminal (1) about this, and, upon acceptance of the callback of the dial-in system (5) couples the callback with the internally held connection to the telecommunication terminal (A).

9. Method according to Claims 5 and 7, **characterized in that**, after the connection to the dial-in system (5) has been cleared down, a callback of the dial-in system is awaited for a defined time and, when the callback fails to occur within the predetermined time, an alternative routing is performed.

10. Method according to at least one of Claims 5 to 9, **characterized in that** a SETUP protocol data element is already transmitted by the calling end system (A) before the complete ISDN number of the called end system (B), which is contained in the destination subaddress, is present, and **in that** the still missing parts of the destination subaddress are transmitted by means of one or more INFO protocol data elements, the completeness of the destination address being checked by one of the switching centres (6) of the first communication network (3) that participate in the connection setup.

11. Dial-in system in a communication network for carrying out the callback method according to Claim 1,
**characterized by**
a) detection means for detecting the call number of a called end system (B) in an out-of-band signal sent from a calling end system (A) to the dial-in system (5),
b) connecting means for connection setup and cleardown to the called end system (B) on the basis of the call number sent as an out-of-band signal by the calling end system (A), and
c) callback means for carrying out a callback to the calling end system (A), the call number of the called end system (B) representing the source address of the callback.

12. Dial-in system according to Claim 11, **characterized in that** the detection means have means for removing the destination address in an ISDN SETUP protocol data element and for setting the previous destination subaddress as new destination address.

13. Least cost routing system for carrying out the callback method according to Claim 1, which is connected upstream of a telecommunication unit, in particular a telecommunication installation, a telephone or a PC and controls a connection setup and cleardown,
**characterized by**
a) means (103) for inserting the call number of a dial-in system of a communication network into an out-of-band signal containing the call number of a called end system (B),
b) means for setting up a connection to the dial-in system (5), the call number of the called end system (B) being concomitantly transmitted in the out-of-band signal to the dial-in system (5),
c) means for clearing down a set-up connection to the dial-in system (5) whilst holding the corresponding internal connection to the connected telecommunication terminal, and
d) means for accepting a callback on the part of the dial-in system (5) and for coupling the callback with the internally held connection to the telecommunication terminal.

14. Least cost routing system according to Claim 13, **characterized in that** the means for insertion have means (103) which, in an ISDN SETUP protocol data element, set the call number of the dial-in system as destination address and the call number of the called end system as destination subaddress.

## Revendications

1. Procédé de rappel, selon lequel un souhait de liaison d'un système terminal appelant d'un premier réseau de communication est indiqué à un système de sélection dans un second réseau de communication, le système de sélection envoie au moyen du second réseau de communication une signalisation en direction du terminal appelé et, lorsque le système terminal appelé est dans l'état prêt pour la réception un rappel du système de sélection en direction du système terminal appelant est exécuté,
**caractérisé en ce que**
déjà lors de l'indication du souhait de liaison, le numéro d'appel du système terminal appelé (B) est communiqué au système de sélection (5), le numéro d'appel du système terminal appelé (B) étant transmis conjointement avec le numéro d'appel du système de sélection (5) en tant que signal de bande extérieure du système terminal appelant (A) au système de sélection (5).

2. Procédé selon la revendication 1, **caractérisé en ce que**, lorsque le signal terminal appelé (B) est prêt pour la réception d'une conversation, le système terminal appelant (A) interrompt la liaison avec le système de détection (5) et il se produit ensuite un rappel du système de sélection (5) en direction du système terminal appelant (A).

3. Procédé selon au moins l'une des revendications 1 et 2, **caractérisé en ce que** le système terminal appelant (A) et le système terminal appelé (B) sont reliés entre eux au moyen d'une liaison RNIS, une transmission du numéro d'appel du système terminal appelé en direction du système de sélection s'effectuant dans le canal D.

4. Procédé selon la revendication 3, **caractérisé en ce que**
a) un élément de données de protocole SETUP de canal D, émis par le système terminal appelant (A), contient en tant qu'adresse de destination le numéro RNIS du système de sélection (5) pour le second réseau de communication (4) et, en tant que sous-adresse de destination le numéro RNIS du système terminal appelé (B),
b) l'élément de données de protocole SETUP est transmis, en fonction de son adresse de destination, au système de sélection (5) du second réseau de communication (4) au moyen d'un ou de plusieurs centraux associés (6) du premier réseau de communication (3), et
c) que la sous-adresse de destination présente jusqu'alors est établie en tant que nouvelle adresse de destination dans le système de sélection (5) du second réseau de communication (4), et
d) après l'établissement de réglage de la sous-adresse de destination présente jusqu'alors en tant que nouvelle adresse de destination un signalisation est exécuté depuis le système de détection (5) en direction du système terminal appelé (B).

5. Procédé selon la revendication 4, **caractérisé en ce que** lorsqu'il est dans l'état prêt pour la réception d'un appel, le système terminal appelé (B) envoie un élément de données de protocole ALERT et/ou un élément de données de protocole CALL PROCEEDING au système de sélection (5) et que l'élément de données de protocole correspondant est transmis d'une manière transparente par le système de sélection au système terminal appelant (A,1), à la suite de quoi
e) le système terminal appelant (A,1) supprime la liaison avec le système de sélection (5),
f) le système de sélection (5) exécute, avec le numéro d'appel du système terminal appelé (B) en tant qu'adresse d'origine, un rappel en direction du système terminal appelant (A,1), et
g) le rappel est reçu par le système terminal appelant (A,1).

6. Procédé selon la revendication 4, **caractérisé en ce que** lorsque le système terminal appelé (A) est dans l'état de fonctionnement "occupé", le système de sélection (5) interrompt la liaison avec le système terminal appelé (B), **en ce que** les instructions correspondantes de signalisation sont transmises au système terminal appelant (B) et que la liaison entre le système terminal appelant et **en ce que** le système de sélection est également supprimée.

7. Procédé selon au moins l'une des revendications précédentes, **caractérisé en ce que** le système terminal appelant comporte une unité de télécommunication (A), notamment une installation TK, un téléphone ou un ordinateur PC et un système d'acheminement à moindre coût (1), qui commande l'établissement et la suppression de la liaison.

8. Procédé selon les revendications 5 et 7, **caractérisé en ce que** lors de la réception d'un élément de données de protocole ALERT et/ou d'un élément de données de protocole CALL PROCEEDING, le système d'acheminement à moindre coût (1) supprime la liaison avec le système de sélection (5) sans en informer l'appareil terminal TK (1) raccordé et, lors de la réception du rappel du système de sélection (5), transmet le rappel à l'appareil terminal TK (1) au moyen de la liaison maintenue de façon interne.

9. Procédé selon les revendications 5 et 7,
**caractérisé en ce qu'**après la suppression de la liaison au système de sélection (5) pendant un intervalle de temps défini il se produit une attente du système de détection et que lors de l'absence du rappel au cours de l'intervalle de temps prédéterminé, un autre montage est exécuté.

10. Procédé selon au moins l'une des revendications 5 à 9, **caractérisé en ce qu'**un élément de données de protocole SETUP est émis par le système terminal appelant (A) déjà avant que soit présent le numéro RNIS complet du système terminal appelant (B), qui est contenu dans la sous-adresse de destination, et que les parties encore manquantes de la sous-adresse de destination sont transmises par un ou plusieurs éléments de données de protocole INFO, l'état complet de l'adresse de destination étant contrôlé par l'un des centraux (6), participant à l'établissement de la liaison, du premier réseau de communication (3).

11. Système de sélection pour un réseau de communication pour la mise en oeuvre du procédé de rappel selon la revendication 1,
**caractérisé par**
a) des moyens de détection servant à détecter le numéro d'appel d'un système terminal appelé (B) dans un signal de bande extérieure, émis par un système terminal appelant (A) en direction du système de sélection (5),
b) des moyens de liaison pour l'établissement et la suppression de la liaison avec le système terminal appelé (B) sur la base du numéro d'appel émis en tant que signal de bande extérieure, par le système terminal appelant (A), et
c) des moyens de rappel pour l'envoi d'un rappel au système terminal appelant (A), le numéro d'appel du système terminal appelé (B) représentant l'adresse d'origine du rappel.

12. Système de sélection selon la revendication 11, **caractérisé en ce que** les moyens de détection comportent des moyens pour éliminer l'adresse de destination dans un élément de données de protocole SETUP RNIS et pour insérer la sous-adresse de destination, présente jusqu'alors, en tant que nouvelle adresse de destination.

13. Système d'acheminement à moindre coût pour la mise en oeuvre du procédé de rappel selon la revendication 1, qui est branché en amont d'une unité de télécommunication, notamment d'une installation TK, d'un téléphone ou d'un ordinateur PC, et commande l'établissement et la suppression d'une liaison,
**caractérisé par**
a) des moyens (103) pour ajouter le numéro d'appel d'un système de sélection d'un réseau de communications dans un signal de bande extérieure, qui contient le numéro d'appel d'un système terminal appelé (B),
b) des moyens pour établir une liaison avec le système de sélection (5), le numéro d'appel du système terminal appelé (B) étant transmis conjointement dans le signal de bande extérieur au système de sélection (5),
c) des moyens pour supprimer une liaison établie en direction du système de sélection (800) moyennant le maintien de la liaison interne correspondante avec l'appareil terminal TK raccordé, et
d) des moyens pour recevoir un rappel de la part du système de sélection (5) et pour réaliser le couplage du rappel à l'appareil terminal TK au moyen de la liaison correspondante maintenue de façon interne.

14. Système d'acheminement de moindre coût selon la revendication 13, **caractérisé en ce que** les moyens d'adjonction comprennent des moyens (103), qui placent dans un élément de données de protocole SETUP RNIS, le numéro d'appel du système de sélection en tant qu'adresse de destination et le numéro d'appel du système terminal appelé en tant que sous-adresse de destination.
